# EUROPEAN PATENT APPLICATION

(11) **EP 3 421 322 A1**
(43) Date of publication of application: **02.01.2019**
(21) Application number: 18180820.5
(22) Date of filing: 29.06.2018
(51) Int. Cl.: B62B 3/14, A47F 5/13, G09F 15/00

(54) **DISPLAY SYSTEM, DISPLAY BOARD, AND METHOD**

(30) Priority: 29.06.2017 NL 2019143
(71) Applicant: Floramedia, 1551 NC Westzaan (NL)
(72) Inventor: Braan, Michel Clemens, 1551 NC Westzaan (NL)
(74) Representative: V.O.

(57) **Abstract**

The disclosure relates to a display system. The display system comprises a support structure, for instance a trolley or a shop display rack. The display system further comprises a display board releasably mounted to the support structure. The display board includes a plate-shaped display portion and two legs each inserted into a respective one of two receiving channels defined by the support structure, in particular defined by two posts of the support structure. Both the display portion and the legs are made from sheet material. Preferably, both the display portion and the legs are integral parts of the display board, and are integrally formed from a single piece of sheet material. Additionally or alternatively, the sheet material can be formed by corrugated board material, for instance corrugated plastic or corrugated fiberboard. Advantageously, the legs inserted into the receiving channels can be at least partly formed by bent sheet material.

## Description

The disclosure relates to a display system, comprising a support structure, for instance a trolley or a shop display rack, and a display board mounted to said support structure, for instance for promoting products for sale which are supported and displayed by said support structure.

Such display systems are known and are often used in shops to display products, such as for instance plants on sale. The display board may show information, for instance about a special promotion relating to the products supported by the support structure. As noted, the support structure may be a display rack, and it may comprise shelves for supporting products. However, in stead of display racks, trolleys are used as the support structures for displaying the products, for instance in the so-called green market. This may be advantageous, for example because such trolleys can be used both for transporting the products to the shop, and for subsequently displaying these products, without the need of unloading them from a transport container and placing them onto a display structure, thereby thus saving on handling time.

For example, display systems are known in which the support structure is formed by a trolley, in particular a so-called Danish Trolley. Said trolley has multiple horizontally extending rectangular shelves located above each other, which shelves are supported by four upright extending corner posts. Each of the posts has a substantially rectangular C-shaped cross-section defining a hollow space inside the post, which is open at the upper end of said post. Further, these known display systems comprise pre-printed rectangular display boards, in particular made of corrugated board material, which for instance may extol the virtues of the products for sale, may display a promotional offer, and/or the like. Said display boards are releasably mounted to the trolley, such that the trolley can be reused, for instance with different products and/or a different promotion. The pre-printed display board can be mounted onto the trolley in different known ways.

Often, both the left side edge and the right side edge of the rectangular display board are stapled or screwed onto the upper portion of a respective one of two wooden beams, wherein the lower portions of said beams are inserted into a respective corner post of the trolley.

Usually, for example when the Danish Trolley or other trolley is used to transport plants from a grower to a shop, the pre-printed display board, which usually is provided by the grower or another supplier of the shop, is to be installed in the shop. This, because said display board, which after installation is upwardly extending from the upper ends of the corner posts of the trolley, may otherwise complicate, if not prevent, the transport and/or the storage of the trolley loaded with products, in particular due to the relatively large height of a trolley provided with such an upwardly protruding display board. Actually, a Danish Trolley with an installed display board is usually too high to fit into the cargo space of a lorry. However, installing the display board in the shop may not be convenient either, for example because shop staff may lack the tools or skills to easily mount the display board onto the wooden beams, and may even entirely omit installing the display board, as a result of which a supplier, e.g. a grower, may miss out on the exposure he envisaged.

To address such issues, it has been proposed to use two dedicated injection moulded plastic members for supporting the display board, which dedicated support members have an elongated shape with a bottom portion for insertion into the corner post of a Danish Trolley and a top portion provided with a slot into which the display board can be clamped. An advantage of using these dedicated plastic support members in stead of standard wooden beams or slats lies in that shop staff does not need tools to install a display board onto a trolley. However, these dedicated injection moulded elongate support members are relatively expensive.

It is an object of the present disclosure to provide an alternative display system having a support structure and a display board. Preferably, it can be an object of the present disclosure to alleviate or solve one or multiple disadvantages of one or more known display systems having a support structure and a releasably mountable display board. More in particular, it may be considered an object of the disclosure to alleviate or solve at least one disadvantage mentioned above. In embodiments, the disclosure may aim to provide a display system with a support structure, in particular a trolley, which display system can be easily adapted to display different information and/or promotions and wherein the display system can be transported and/or stored in a relatively easy manner.

Thereto, in a first aspect, the disclosure provides for a display system, comprising a support structure, for instance a trolley or a shop display rack, and a display board releasably mounted to said support structure, said display board including a plate-shaped display portion and two legs each inserted into a respective one of two receiving channels defined by the support structure, in particular defined by two posts of said support structure, wherein both the display portion and the legs are made from sheet material.

By providing a display board which itself is already provided with legs for insertion into receiving channels of the support structure, mounting the display board onto said support structure can be facilitated, as no tools are required for mounting the display boards onto separate legs, such as for instance separate legs formed by wooden beams or slats. For example, this may counteract that shop personnel omits installing the display board.

Making both the display portion and the legs from sheet material, in particular the same sheet material, may cut costs, for example in comparison to dedicated injection moulded support members. Additionally or alternatively, it may pre-empt waste separation, as both display portion and the legs can be easily discarded in a single waste stream. In comparison to a known display board attached to separate legs of different material, discarding said display board of the present disclosure can be relatively quickly, as the legs do not need to be disassembled, and/or can be relatively environmentally friendly, as it can counteract that different materials end up in a particular waste stream.

Advantageously, both the display portion and the legs are integral parts of the display board, and are integrally formed from a single piece of sheet material. As a result, the display board can be produced in a relatively simple and/or economic manner.

By forming the leg at least partly from bent sheet material, in particular by rolling or folding the sheet material, the leg, which may be formed from sheet material having a thickness much smaller than the depth of the receiving channel into which the leg is to be inserted, it may be facilitated that said leg fits relatively well in said receiving channel, despite the relatively small thickness of the sheet material, which in particular may be formed by corrugated board material, for instance corrugated plastic or corrugated fibreboard, for example in order to save on weight.

In embodiments, the legs may include at least one hinge, which may preferably be formed by a prefabricated fold line, wherein said at least one hinge extends substantially in the length direction of the leg. As a result, it can be facilitated that the leg is formed from bent, in particular folded, sheet material.

By providing each of the two legs of the display board with a respective one of two hinges, preferably formed by prefabricated fold lines, extending substantially in line with each other and in the width direction of the plate-shaped display portion, the legs can be folded in such a manner that a lower portion of each of the legs can be received in the respective receiving channel, while the plate-shaped display portion of the display board do then not need to protrude upwardly, but may for instance hang down, for example along a rear side of the trolley or other support structure. As a result of preinstalling the display board, even though it is in a transport state and not in a display state, it can be counteracted that shop personnel places the support structure in the shop without the display board, for instance because shop personnel may no longer overlook the display board or simply lay aside the display board inattentively.

The disclosure also relates to a display board for use with support structure, in particular a shop display rack or a trolley, in particular a Danish Trolley. Further, the disclosure relates to a method for installing a display board on a support structure.

Advantageous embodiments according to the disclosure are described in the appended claims.

By way of non-limiting examples only, embodiments of the present disclosure will now be described with reference to the accompanying figures in which:
Fig. 1 shows a schematic perspective view of a first embodiment of a display system according to an aspect of the disclosure in a use position;
Fig. 2 shows a schematic perspective view of the display system of Fig. 1 in a transport position;
Fig.3 shows a schematic side view of a detail of a display board of the display system of Figs. 1 and 3;
Figs. 4A-4C show three schematic perspective views of a detail of the display system of Figs. 1 and 2 in which its display board is shown in three different positions; and
Fig. 5 shows a schematic side view of an alternative embodiment of a display board according to an aspect of the disclosure.

It is noted that the figures show merely preferred embodiments according to aspects of the disclosure. In the figures, the same or similar reference signs or numbers refer to equal or corresponding parts.

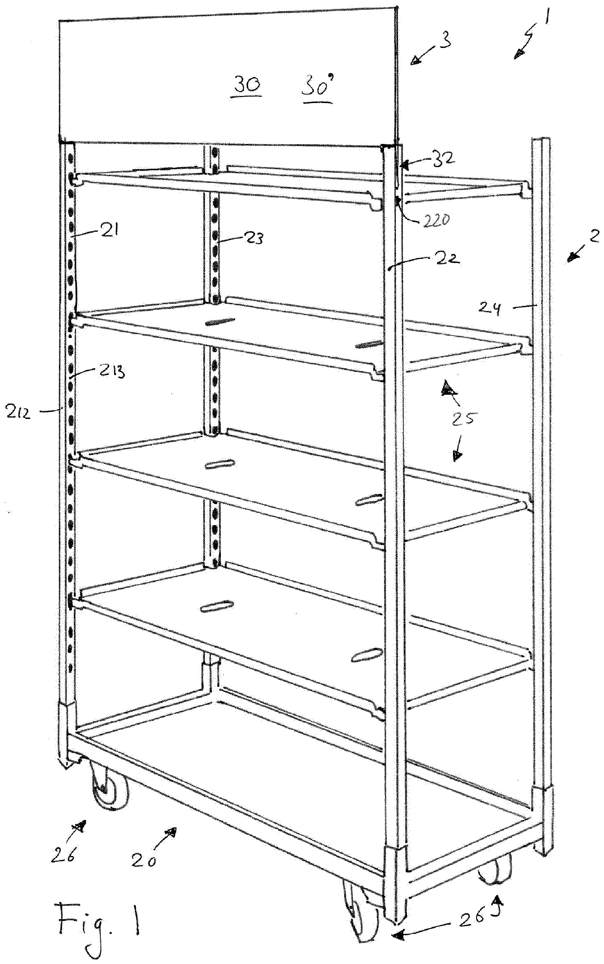

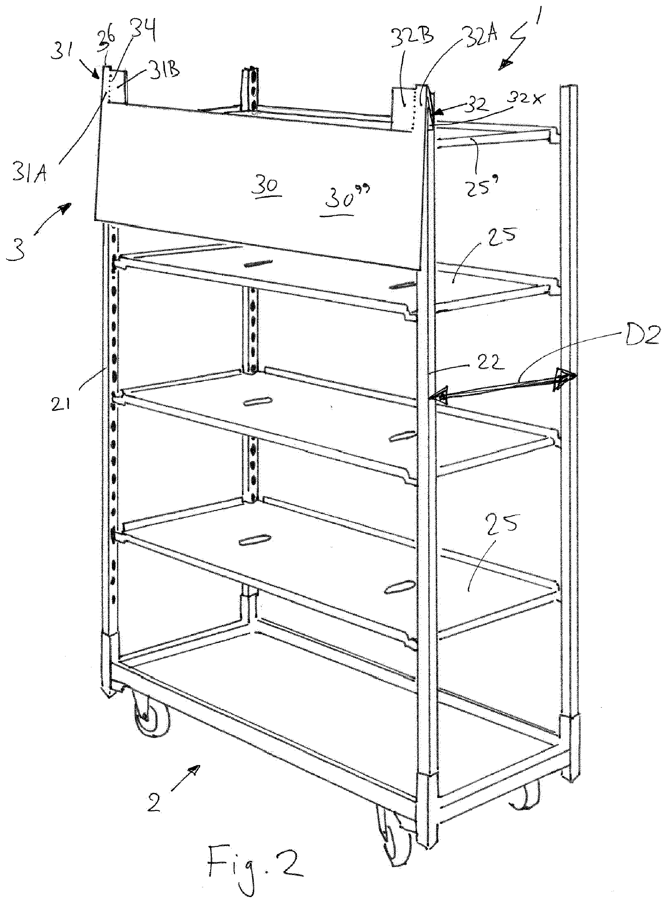

Figures 1 and 2 show schematic perspective views of a display system 1 in two different positions thereof. The display system 1 may be used support products, such as for instance plants or other products. The products may be supported by the display system 1, in particular by a support structure 2 of said system 1. for example in a shop. For example, the support structure 2 may be a display rack, and it may comprise shelves for supporting the products. However, in advantageous embodiments, the support structure 2 may be a trolley, in particular a so-called shelf trolley such as for example a so-called Danish Trolley. However, other trolleys are possible as well, such as for instance so-called Half Danish Trolleys or so-called CC trolleys or so-called EC trolleys. Arranging the support structure 2 as a trolley may be advantageous, for example because a trolley can be used both for transporting the products to the shop, and for subsequently displaying these products, thereby for instance saving on handling time.

In embodiments, such as in the embodiment shown here, the support structure 2 comprises a base 20, which may be provided with wheels 26, in particular casters. Additionally or alternatively, the support structure 2 can be provided with upwardly, preferably substantially vertically, extending posts 21, 22, 23, 24, in particular tubes 21-24, for instance formed by four corner posts. Further, the support structure 2 can comprise one or multiple shelves 25 for supporting the products thereon.

The display system 1 not only comprises the support structure 2, but also comprises a display board 3. The display board 3, in particular a plate-shaped display portion 30 thereof, may show information, in particular information in the form of graphics, data, text, logo's and/or the like, which may relate to the products supported and/or displayed by the support structure 2. For example, one or both sides 30', 30" of the plate-shaped display portion 30 may be printed. The display board 3 is releasably mounted to said support structure 2, for instance such that it can be removed when a special promotion ends and/or to allowing replacement of the display board 3 by another display board, for example when the support structure 2 is reused, in particular with other products.

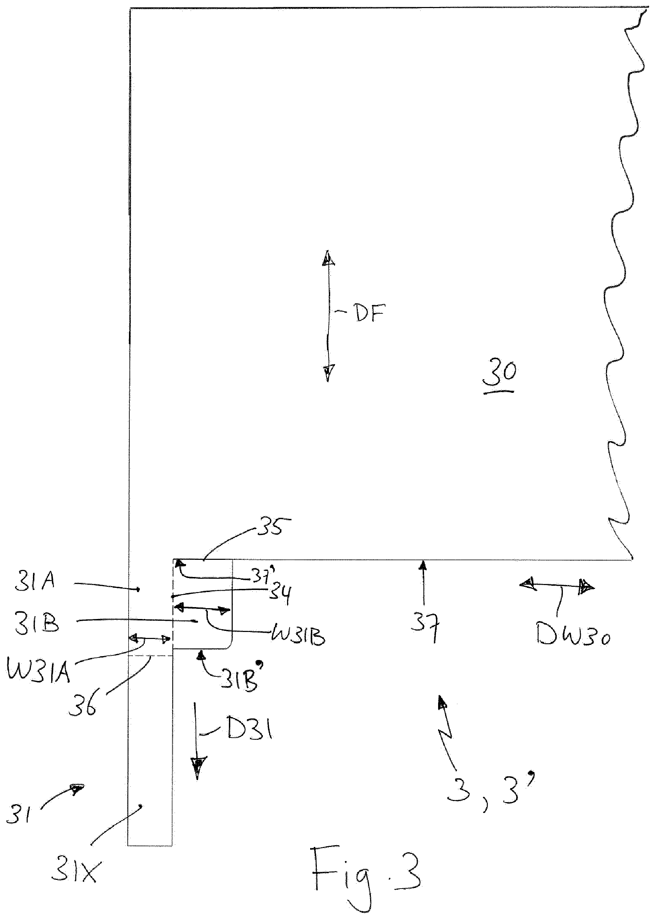

Besides said plate-shaped display portion 30, which here has a substantially rectangular shape, but which may be shaped differently, for example having a non-straight upper edge, the display board 3 also includes two legs 31, 32, which can be seen relatively well in Figure 3, which shows a schematic side view of a detail of the display board 3.

It is noted that both the display portion 30 and the legs 31, 32 are made from sheet material, such as for example corrugated board material. Said corrugated board material may preferably be corrugated plastic or so-called corriboard. It is noted that in the context of the present disclosure, corrugated plastic can be considered to include both so-called twin-wall plastic and multiwall plastic. For example, the corrugated plastic can be made from polypropylene, which can be recycled relatively well. Alternatively, other plastics are possible, such as for instance PET or HDPE. Moreover, other corrugated material, such as corrugated fibreboard, or other sheet material not being corrugated sheet material, such as cardboard, may be possible as well.

Advantageously, the legs 31, 32 can extend substantially in a direction D31, D32 substantially parallel with the longitudinal direction DF in which flutes of a fluted corrugated sheet of the corrugated board material extend. In the display state of the display board 30, such flutes may thus extend in a substantially vertical direction.

In preferred embodiments, the display board 3 may be formed as an integral part, for instance as an integral blank. Both the display portion 30 and the legs 31, 32 can thus be integral parts of the display board 3, and may thus be integrally formed from a single piece of sheet material, for example by blanking or punching.

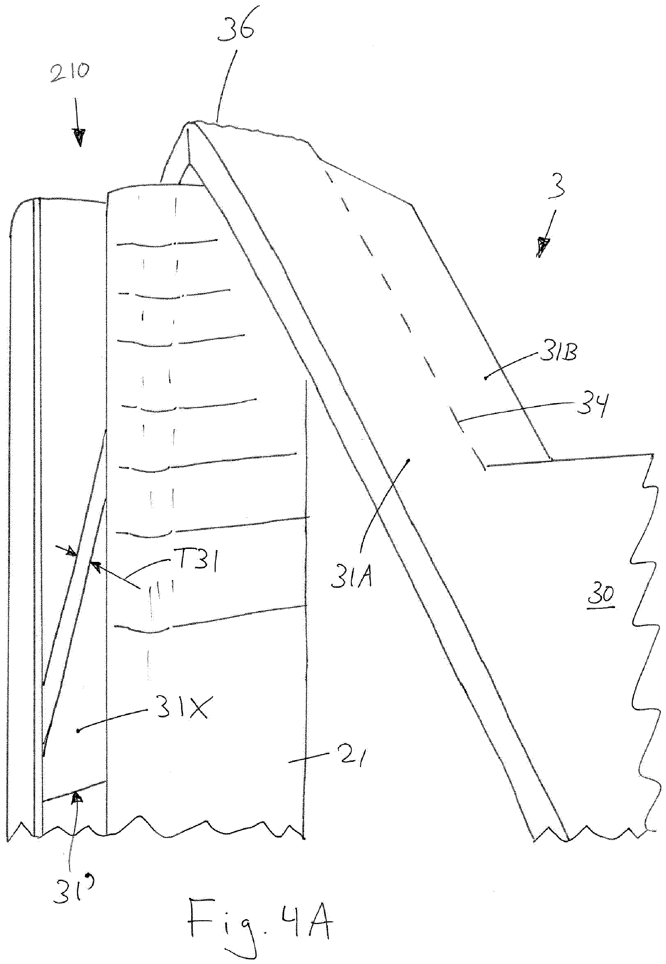

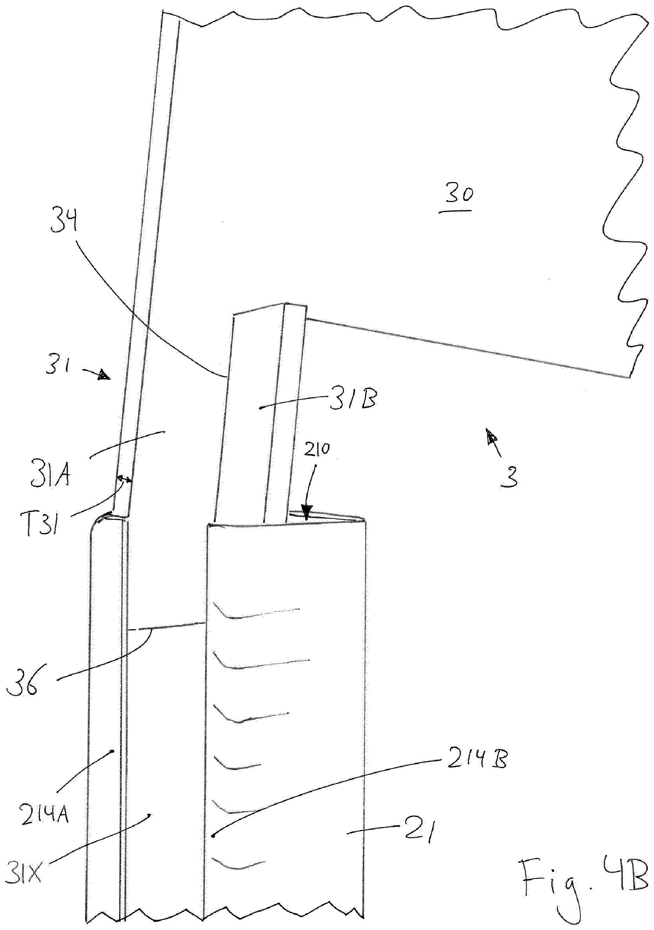

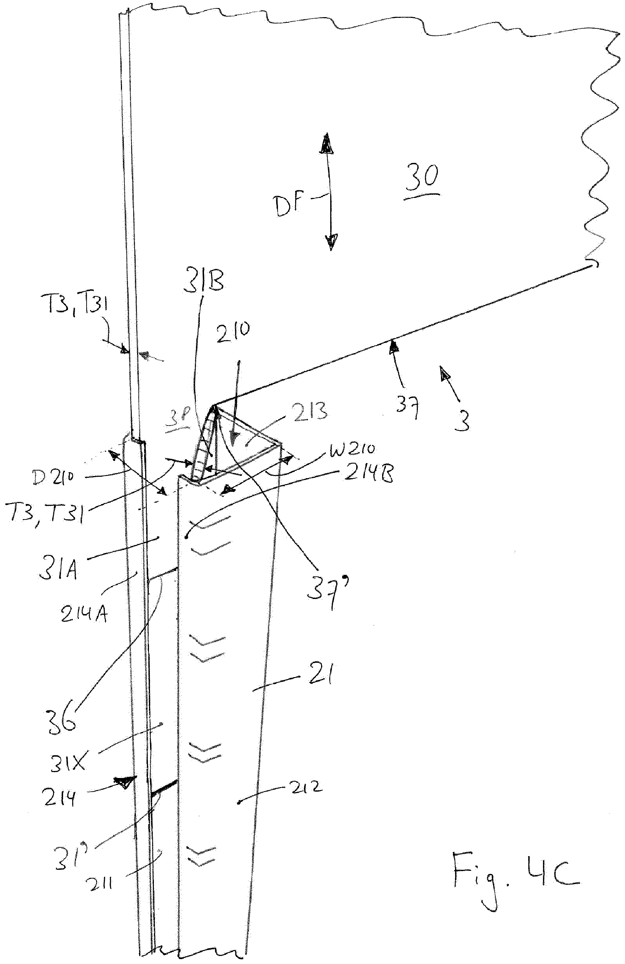

As for instance can be seen in Figures 4A, 4B and 4C, which show three schematic perspective views of a detail of the display board 3 and a portion of a post 21 of the support structure 2, each leg 31 can be inserted into a receiving channel 210 defined by the support structure 2, in particular defined by a respective post 21 of said support structure 2. It is appreciated that the receiving channels 210, 220, and/or the posts 21, 22 may be open at their upper ends in order to allow the legs 31, 32 of the display board 3 to be inserted therein.

As can be seen relatively well in Figure 4C, the post 21 can have a substantially rectangular, preferably substantially square, C-shaped cross-section defining a hollow space 210 inside said post 21. Said post 21 having a rectangular C-shaped cross-section can have a front wall 211, an opposite rear wall 212 and a side wall 213 interconnecting said front wall 211 and rear wall 212. At the side 214 opposite the side wall 213, the post may be substantially open, but may preferably comprise two flanges 214A, 214B thereby bordering two respective corners of the receiving channel 210.

Figure 4C shows the display board 3 in a position in the same state as in Figure 1, in particular a display state, in which the display board 3, or at least the plate-shaped display portion 30 thereof, may extend substantially upright, in particular substantially vertically. As can be seen there in Figure 4, the thickness T3 of the sheet material of the display board 3, in particular the thickness T31 the respective leg 31, can be substantially smaller than the depth D210 and/or the width W210 of the receiving channel 210 in which said leg 31 is inserted. Preferably, for instance to relatively tightly fit the leg 31 into the receiving channel 210, the leg is at least partly formed by a bent piece of sheet material, for instance forming a reinforcement for the leg. Here in the embodiment of Figure 4C, the bent piece of sheet material is formed by two leg portions 31A, 31B, formed from a single sheet, wherein a second leg portion 31B of said leg portions is folded with respect to a first leg portion 31A. Said second leg portion 31B may be formed as a flap connected to the first leg portion 31B by means of a fold line, in particular a prefabricated fold line.

Although the bent piece of sheet material 31A, 31B of the leg 31 can thus be formed by folding leg portions with respect to each other, in alternative embodiments, the bent piece of sheet material may be bent differently, for instance by means of curling or rolling the sheet material.

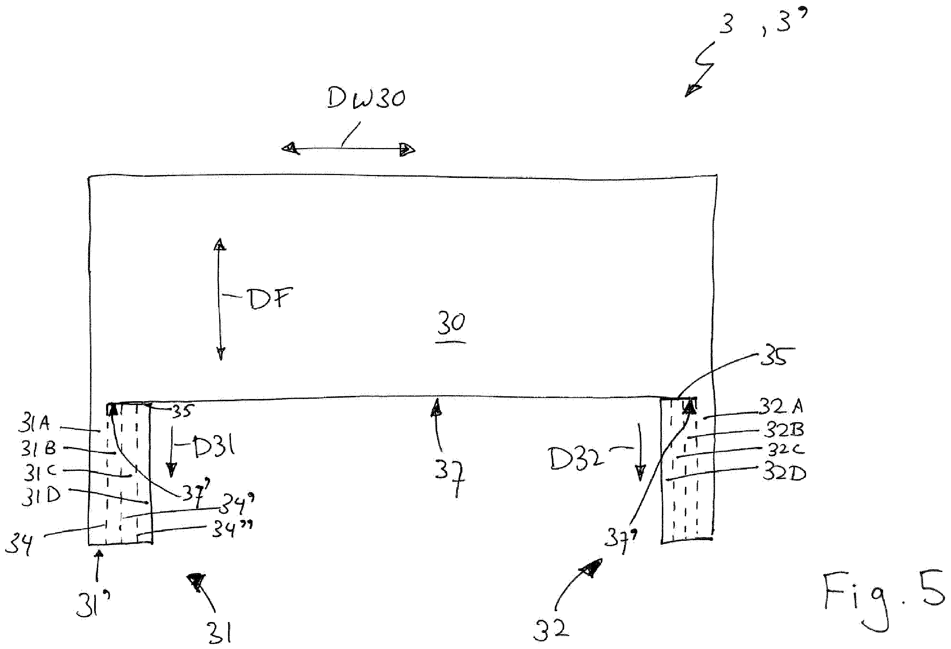

In advantageous embodiments, the legs 31, 32 may thus comprise at least two leg portions 31A, 31B, 32A, 32B located alongside each other, when seen in the width direction DW30 of the display portion 30 of the display board 3, which width direction DW30 can extend substantially transverse to the insertion direction D31, D32 of the respective leg 31, 32. Said leg portions 31A, 31B, 32A, 32B may be connected to each other by means of a hinge 34, extending substantially parallel to the direction D31, D32 in which the respective leg 31, 32 extends away from the plate-shaped display portion 30. The hinge 34 may be formed by a fold, in particular a fold formed by means of a prefabricated fold line, which may be present in a blank 3', such as for instance shown in Figure 3 and Figure 5, the latter one showing an alternative display board design, having more than two leg portions 31A-31D, 32A-32D located alongside each other and divided by means of multiple hinges 34, 34', 34", here formed by prefabricated fold lines. In alternative embodiments, the hinges may be formed differently, for instance by means of a living hinge. Here four of such leg portions are shown per leg, but other numbers are possible as well, such as three or five leg portions. The leg portions 31A-31D, 32A-32D may be folded, for instance forming a leg being relatively thick in the direction of the depth D210 of the receiving channel 210. In embodiments, the one or more of these leg portions 31A, 31D may be adhered together before inserting them into the receiving channel. However, preferably the leg portions are not adhered to each other.

It will be appreciated that, in order to enable folding the second leg portion 31B, and further leg portion(s) 31C, 31D, if any, with respect to the first leg portion 31A, in embodiments, said second, and further, leg portion(s), may at their upper end be disconnected from the plate-shaped display portion 30, for instance by means of a cut 35.

In embodiments, such as in the embodiment of Figures 3 and 4C, the leg 31 comprises two leg portions 31A, 31B next to each other, wherein the foldable second leg portion 31B preferably can have width W31B corresponding with the largest cross-sectional dimension, for instance the diameter, or as in the present embodiment, the diagonal, of the receiving channel 210. Additionally, the first leg portion 31A may have a width W31A corresponding with the width W210 of the receiving channel 210, such that the leg 31, once folded, can be substantially fittingly be held within said receiving channel 210.

Preferably, the foldable second leg portion 31B of a respective leg 31, and any further foldable leg portion of said leg, if any, can be located inwardly with respect to the first leg portion 31A, i.e. at the side of said leg 31 facing the other leg 32. As a result, the complete width of the display board 3, in particular in its preinstalled state in which it still hangs down, does not substantially exceed the total width of the trolley 2 or other support structure. Nevertheless, if a second and/or further foldable leg portion would be provided at the outwardly facing side of the first leg potion 31A, it may be folded around the post such, e.g. as not to protrude to a too large extent during transport of the trolley 2.

Additionally or alternatively, the legs 31, 32 may be provided with hinges extending substantially transverse to the direction D31, D32 in which the legs extend. This is, as can be understood from Figure 3, the two legs 31, 32 can both be provided with a respective one of two hinges 36, extending substantially in line with each other and in the width direction DW30 of the plate-shaped display portion 30. Also these hinges 36, which may extend substantially horizontally, can be formed as prefabricated fold lines, but may be formed otherwise, for example by means of living hinges. Said hinge 36 may be located at a position of the leg which is inserted relatively deeply into the receiving channel 210 when the leg is maximally inserted, such shown in Figure 4C and Figure 1. As can be seen in Figure 4C, when the leg 31 is inserted to its maximum extent into the receiving channel 210, the upper end of the post 21 defining said receiving channel 210 abuts against a bottom edge 37 of the plate-shaped display portion 30, in particular in a bottom edge region 37' located adjacent to a respective position 38 where the respective leg 31 adjoins the plate-shaped display portion 30. Said hinge 36 can thus be offset with respect to the region 37' of the bottom edge 37 of the plate-shaped display portion 30 that adjoins the respective leg 31, in a direction D31 away from the plate-shaped display portion 30.

In particular, said hinge 36 can be located below a bottom edge 31B' of the second leg portion 31B. In other words, the second leg portion 31B does not extend away from the plate-shaped display portion 30 to such extent that it reaches or even passes the position said hinge 36. As a result, it can be counteracted that said second leg portion 31B hinders folding back the display board 3.

The portion of the leg located below said hinge 36 can be considered the bottom portion 31X of the leg 31. Said bottom portion 31X can thus extend from a distal end 31' of said leg 31 up to the respective one of the two hinges 36 extending substantially in line with each other and in the width direction DW30 of the plate-shaped display portion 30. Preferably the length L31X of said bottom portion 31X of the leg 31, measured in the direction in which the leg 31 is inserted into the receiving channel 210, can be substantially larger than the depth D210 of the respective receiving channel 210. As a result, as can be understood from Figure 2, it can be counteracted relatively well that the bottom portions 31X, 32X of the legs 31, 32 unintentionally come out of the receiving channels 210, 220, when the respective top portion 31A, 32A located at the opposite side of said hinge 36 is not inserted into the respective receiving channel 210, 220, for example in a storage position or transport position in which the plate-shaped display portion 30 and the top portions 31A, 32A of the legs are folded back. For example, said length L31X can be at least twice, at least three times, or even at least four times, as long as the receiving channel's depth D210. It is noted that said bottom portion 31X, 32X of the leg may be considered a hook portion 31X, 32X for hooking the display board onto the trolley 2 or other support structure 2.

The display board 3 can be used with advantage in a method in which the display board 3 is installed onto the support structure 2, by inserting at least the bottom portion 31X, 32X of each of the two legs 31, 32 at least partly into a respective one of the two receiving channels 210, 220. The rest of the display board 3 may be folded back by means of substantially horizontally extending fold lines 36 or other pivots or hinges 36, as can be seen in Figure 4A. Preferably, the plate-shaped display portion 30 can be folded down to such extent that hangs down along the posts 21, 22 and/or along a side of the support structure 2, in particular at an outside, such as the rear side of the support structure 2, as is shown in Figure 2, preferably such as not to hinder products located on the shelves 25. In this manner, the display system 1 including the preinstalled display board 3 is not substantially higher, wider or deeper than the bare trolley or other support structure 2.

Alternatively, the preinstalled display board 3 may be folded towards the other side in order to make the system 1 relatively compact for storing or transporting. In particular, the display board 3 may be fold inwardly, for example to such extent that it is hanging alongside the posts 21, 22, which in the embodiment of Figure 2 could be possible upon removing the upper shelve 25'. As another example, the folded down display board 3 could be stored in a substantially horizontal manner, then for instance forming a cover for support structure 2, here formed by a trolley 2. In such case, the distance from the respective hinge 36 up to the top edge 39 of the plate-shaped display portion 30 may substantially correspond with the depth D2 of the support structure 2.

During transport the support structure 2, here formed by a trolley 2, can be wrapped, in particular by means of foil, or can be covered in a flexible cover. It will be understood that the preinstalled display board 3 hanging down from its bottom leg portions 31X, 32X can be held in place by means of such wrapping or such a cover. Additionally or alternatively, the preinstalled display board 3 may be temporarily fixed by other means, for example by means of a strap or tie.

When the already preinstalled display board 3 is to be used, for instance to promote products for sale, it can be erected, as for instance can be understood when comparing Figure 4A and Figure 4B. At least a part 31A, 31B of each of the legs 31 can then be bent around an axis extending substantially in the direction of the receiving channel, for example by folding the second leg portion 31B with respect to the first leg portion 31A. Subsequently, the display board 3 may be lowered, thereby inserting said bent part 31A, 31B of each of the leg 31 into the receiving channel 220, thereby releasably mounting the display board 3 in an upright position.

It is noted that for the purpose of clarity and a concise description features are described herein as part of the same or separate embodiments, however, it will be appreciated that the scope of the disclosure may include embodiments having combinations of all or some of the features described.

Further, it is noted that the invention is not restricted to the embodiments described herein. It will be understood that many variants are possible. Such variants will be apparent for the person skilled in the art and are considered to lie within the scope of the invention as formulated in the following claims.

## Claims

1. Display system, comprising a support structure, for instance a trolley or a shop display rack, and a display board releasably mounted to said support structure, said display board including a plate-shaped display portion and two legs each inserted into a respective one of two receiving channels defined by the support structure, in particular defined by two posts of said support structure, wherein both the display portion and the legs are made from sheet material.

2. Display system according to claim 1, wherein both the display portion and the legs are integral parts of the display board, and are integrally formed from a single piece of sheet material.

3. Display system according to claim 1 or 2,
wherein the sheet material is formed by corrugated board material, for instance corrugated plastic or corrugated fiberboard; and/or
wherein the thickness of the sheet material of the respective leg is substantially smaller than the depth of the receiving channel in which said leg is to be inserted, and substantially smaller than the width of said receiving channel.

4. Display system according to any one of the preceding claims,
wherein the legs are at least partly formed by a bent sheet material; and/or
wherein the legs include at least one hinge, preferably formed by a prefabricated fold line, extending substantially in the length direction of the leg.

5. Display system according to any one of the preceding claims, wherein the two legs are both provided with a respective one of two hinges, preferably formed by prefabricated fold lines, extending substantially in line with each other and in the width direction of the plate-shaped display portion.

6. Display system according to any one of the preceding claims, wherein the plate-shaped display portion comprises a bottom edge having two bottom edge regions each adjoining a respective one of the two legs, wherein said bottom edge in said bottom edge regions limit the extent to which the legs can be inserted into the receiving channels, wherein each of the two legs comprise a respective one of two hinges, preferably prefabricated fold lines, extending substantially in line with each other and in the width direction of the plate-shaped display portion, and wherein said two hinges, which are preferably formed by prefabricated fold lines, are offset with respect to the bottom edge sections in a direction away from the plate-shaped display portion.

7. Display system according to claim 5 or 6, wherein a bottom portion of the leg extends from a distal end of said leg up to the respective one of the two hinges extending substantially in line with each other and in the width direction of the plate-shaped display portion, and wherein the length of said bottom portion of the leg is at least twice the depth of the respective receiving channel.

8. Display system according to any one of claims 5-7, wherein each of the two legs has a bottom portion extending from a distal end of the respective leg up to the respective one of the two hinges extending substantially in line with each other and in the width direction of the plate-shaped display portion, each of said two legs further having a top portion located at the opposite side of the hinge, wherein the display board is arranged to be brought from a first position in which the bottom portions of the two legs are placed at least partly within a respective one of the receiving channels, the top portions of the legs are outside of said receiving channels, and both legs are bent along the respective hinge, into a second position in which the plate-shaped display portion of the display board and the top portions of the legs are folded up with respect to the first position, and the legs are inserted further into the receiving channels such that the top portions of the legs are also placed at least partly within said receiving channels.

9. Display board for releasable installation onto a support structure, for instance a trolley or a shop display rack, comprising a plate-shaped display portion and two legs for insertion into a respective one of two receiving channels of the support structure, in particular defined by a respective one of two posts of said support structure, wherein both the display portion and the legs are made from sheet material.

10. Display board according to claim 9,
wherein both the display portion and the legs are integral parts of the display board, and are integrally formed from a single piece of sheet material; and/or
wherein the sheet material is formed by corrugated board material, said corrugated board material including a fluted corrugated sheet, the legs extending substantially in the longitudinal direction of the flutes.

11. Display board according to claim 9 or 10,
wherein the plate-shaped display portion has a width direction, and wherein the two legs are extending away from said plate-shaped display portion in two substantially parallel directions extending substantially transverse to said width direction of the plate-shaped display portion,
preferably wherein each of the legs comprises at least two leg portions located alongside each other and connected by means of a hinge, in particular a prefabricated fold line, extending substantially parallel to the direction in which the respective leg extends away from the plate-shaped display portion.

12. Display board according to any one of claims 9-11, wherein the two legs are both provided with a respective one of two hinges, in particular prefabricated fold lines, extending substantially in line with each other and in the width direction of the plate-shaped display portion.

13. Display board according to any one of claims 9-11, wherein the plate-shaped display portion comprises a bottom edge having two bottom edge regions each adjoining a respective one of the two legs, wherein said bottom edge in said bottom edge regions limit the extent to which the legs can be inserted into the receiving channels, wherein each of the two legs comprise a respective one of two hinges, in particular prefabricated fold lines, extending substantially in line with each other and in the width direction of the plate-shaped display portion, and wherein said two hinges are offset with respect to the bottom edge sections in a direction away from the plate-shaped display portion.

14. Display board according to claim 12 or 13, wherein a bottom portion of the leg extends from a distal end of said leg up to the respective one of the two hinges extending substantially in line with each other and in the width direction of the plate-shaped display portion, and wherein the length of said bottom portion of the leg is at least twice the length of said respective hinge, which preferably can be formed by a prefabricated fold line, extending substantially transverse to the length direction of said bottom leg portion.

15. Method for installing a display board on a support structure, for instance a trolley or a shop display rack, comprising the steps of:
providing the support structure, wherein said support structure defines at least two receiving channels, preferably defined by respective posts of said support structure;
providing the display board, wherein the display board includes a plate-shaped display portion and two legs, wherein both the display portion and the legs are formed, preferably integrally formed, from sheet material, in particular corrugated board material; and
inserting at least a bottom portion of each of said two legs at least partly into a respective one of the two receiving channels,
preferably wherein at least a part of each of the legs is bent around an axis extending substantially in the direction of the receiving channel.
